# EUROPEAN PATENT SPECIFICATION

(11) **EP 1 630 047 B1**
(45) Date of publication and mention of the grant of the patent: **09.04.2008**
(21) Application number: 05018178.3
(22) Date of filing: 22.08.2005
(51) Int. Cl.: B60R 21/16

(54) **Airbag and airbag apparatus**
Gassack und Gassacksystem
Coussin gonflable et son système

(30) Priority: 24.08.2004 JP 2004243936; 24.09.2004 JP 2004277487
(43) Date of publication of application: 01.03.2006
(73) Proprietor: TAKATA CORPORATION, Minato-ku, Tokyo 106-8510 (JP)
(72) Inventor: Hasebe, Masahiro, Minato-ku Tokyo 106-8510 (JP); Narimoto, Yukitoshi, Minato-ku Tokyo 106-8510 (JP)
(74) Representative: Vossius & Partner

(56) References cited:
- EP-A- 1 452 403
- US-A1- 2004 160 048
- PATENT ABSTRACTS OF JAPAN vol. 017, no. 099 (M-1373), 26 February 1993 (1993-02-26) & JP 04 292239 A (ASAHI CHEM IND CO LTD), 16 October 1992 (1992-10-16)

## Description

The present invention relates to an airbag and an airbag apparatus for protecting a passenger in case of collision or the like of a vehicle and, more specifically, to an airbag and an airbag apparatus including a left airbag section and a right airbag section which are inflated respectively on the left and right side in front of the passenger.
EP-A 1- 452 403 relates an airbag and an airbag system in which the base end inflates earlier than the distal end. The airbag comprises a right airbag section and a left airbag section and a base-end chamber for communicating them with each other. A partition panel provided between the base end and the distal end has two openings for communicating the base end chamber with the respective front ends of the right airbag section and the left airbag section.

As an airbag for protecting the passenger upon collision or the like of the vehicle, an airbag having a left airbag section and a right airbag section which are inflated on the left side and the right side in front of the passenger respectively and these airbag sections are inflated by a common inflator is disclosed in JP-A-4-292239. In the airbag in the same publication, the left airbag section and the right airbag section are connected to each other by a tie panel at the distal end portions thereof.

The airbag is folded and stored in a case and is covered by a cover. When the inflator (gas generator) is activated and injects gas upon collision of the vehicle, the airbag is inflated in front of the passenger while pushing and opening the cover.

The inflator is disposed inside or outside the proximal side of the airbag. In the airbag apparatus having a structure in which the inflator is disposed outside the airbag on the proximal side thereof, gas injected from the inflator is supplied into the airbag via a gas introduction port provided on the proximal side of the airbag.

When the inflator is disposed inside the airbag on the proximal side, the entire inflator may be disposed in the airbag or part of the inflator may be disposed in the airbag. As an example of the latter case, a pair of slit-shaped openings are provided on the airbag, and the rod-shaped inflator is passed through the slit-shaped openings so that both ends of the inflator are projected out from the airbag is shown.

I. In the airbag having the left airbag section and the right airbag section as in JP-A-4-292239, when the capacities of the left airbag section and the right airbag section in the inflated state are large, it is necessary to employ an inflator having a large capacity in order to inflate the airbag quickly. An object of the present invention is to provide an airbag and an airbag apparatus in which the left airbag section and the right airbag section are inflated sufficiently quickly even when the capacity of the inflator is relatively small, and interference with an A-pillar and the like when being inflated is prevented.

II. In the airbag disclosed in JP-A-4-292239, since the left airbag section and the right airbag section are connected to each other at the distal end portions thereof by the tie panel, the lateral center of the passenger's body is received by the tie panel when the airbag is inflated.

An object of the present invention is, in this mode, to provide an airbag and an airbag apparatus in which the left chest portion of the passenger is received by the inflated left airbag section, the right chest portion thereof is received by the right airbag section, and a void space of the inflated airbag is opposed to the lateral center of the passenger's chest.

III. In the airbag disclosed in the above-described Japanese Unexamined Patent Application Publication No. 4-292239, when the left airbag section and the right airbag section are inflated, gas from the inflator flows more in one of the airbags and hence inflation of the other airbag may be delayed in comparison with the one of the airbags.

In the airbag in the same patent publication, since the left airbag section and the right airbag section are connected by the tie panel, even when inflation of one of the airbags is delayed, the airbag inflated earlier can pull the airbag which is delayed in inflation via the tie panel in the direction of inflation to promote inflation thereof. However, since the tie panel connects the left airbag section and the right airbag section to each other at the distal end portions, the airbag which started inflation earlier cannot pull the airbag which is delayed in inflation sufficiently until the distal side thereof is inflated.

An object of the present invention is, in another mode, to provide an airbag and an airbag apparatus in which both of the left airbag section and the right airbag section are inflated smoothly and evenly from the early stage of inflation.

An airbag according to the present invention (Claim 1) is an airbag adapted in such a manner that the distal side thereof is inflated in the direction away from the proximal side by gas injected from an inflator disposed on the proximal side including: a left airbag section to be inflated on the left side in front of a passenger, a right airbag section to be inflated on the right side in front of the passenger, characterized in that at least one of the left airbag section and the right airbag section which is located closer to a side face of a vehicle cabin, that is, the airbag section on the vehicle body side, is provided with a belt strap for connecting the vehicle body side of the airbag section on the vehicle body side and the opposite side of the airbag section on the vehicle body side, so that when assuming that H represents the entire height of the vertical cross section in the direction of the width of the bag passing through the belt strap when inflation of the airbag section on the vehicle body side is completed, H₁, which is the height from the lowest level of a joint portion between the belt strap and the bag on the vehicle body side of the airbag section on the vehicle body side in the vertical cross section is within the range from 0.4H to 0.8H, and H₂, which is the height from the lowest level of the joint portion between the belt strap and the bag on the opposite side of the airbag section on the vehicle body side in the vertical cross section is within the range from 0.3H to 0.6H, and the relation therebetween is H₁>H₂.
The airbag according to Claim 2 is characterized in that (H₁-H₂) is within the range from 0.1H to 0.5H.

An alternative airbag is defined in claims 3 and 4.

According to Claim 5 the airbag is characterized in that the distal end portions of the left airbag section and the right airbag section are not connected, and in a state in which the airbag is inflated, a void space which opens toward the passenger is defined between the distal end portions of the left airbag section and the right airbag section.

The airbag according to Claim 6 is characterized in that midsections in the direction of inflation of the left airbag section and the right airbag section are connected to each other.

The airbag according to Claim 7 is characterized in that opposed portions of the left airbag section and the right airbag section are connected to each other by a joint member extending in the direction of connection thereof.

An airbag apparatus according to the present invention (Claim 8) includes the airbag according to the present invention and the inflator for inflating the airbag.

According to the airbag and the airbag apparatus of the present invention, as least the vehicle body side bag is provided with the belt strap for connecting the vehicle body side and the opposite side of the airbag section on the vehicle body side, and hence the lateral width thereof is limited in the inflated state, whereby even when the inflator of a small capacity is employed, the airbag is inflated sufficiently quickly.

The airbag section on the vehicle body side is configured in such a manner that H₁, which is the height of the joint portion between the belt strap and the bag on the vehicle body side is within the range from 0.4H to 0.8H, and H₂, which is the height of the joint portion between the belt strap and the bag on the opposite side is within the range from 0.3H to 0.6H, and the relation therebetween is H₁>H₂, the portion of the inflated airbag section on the vehicle body side near the joint portion of the belt strap on the vehicle body side is pulled inwardly and downwardly of the bag by the belt strap. Therefore, the upper portion of the vehicle body side of the inflated airbag section on the vehicle body side is prevented from being interfered with the A-pillar or the members near by.

In particular, (H₁-H₂) is set from 0.1H to 0.5H, the downward pulling amount of the upper portion of the vehicle body side of the inflated airbag section on the vehicle body side may be set to a large value.

In the present invention, a structure in which the distal end portions of the left airbag section and the right airbag section are not connected to each other, and in a state in which the airbag is inflated, the void space opening toward the passenger is defined between the distal end portions of the left airbag section and the right airbag section may also be applicable.

When such the airbag is inflated, the left airbag section receives the left chest of the passenger and the right airbag section receives the right chest of the passenger. In the left and right chest regions, there exists hard and strong rib bones. This airbag receives and absorbs an impact from the passenger via the rib bones. The airbag includes the void space between the distal end portions of the left airbag section and the right airbag section in the inflated state, and the portion of the breast bone at the chest center of the passenger opposes to the void space. Therefore, when the body of the passenger is crushed into the airbag, the portion near the breast bone of the chest is prevented from receiving a large reaction force from the airbag, and hence a burden to be exerted on the breast bone can be reduced.

In a mode of the present invention, the midsections in the direction of inflation of the left airbag section and the right airbag section are connected to each other.

When the midsections are connected to each other as described above, even when inflation of one of the airbags is delayed upon inflation of the airbag, the airbag which is inflating earlier pulls the one airbag which is delayed in inflation to promote the inflation thereof. In addition, since the midsections in the direction of inflation of the left airbag section and the right airbag section are connected to each other, the other bag which started inflation earlier starts pulling the one airbag which is delayed in inflation in the direction of inflation in the early stage of inflation in which the airbag is inflated to the midsection. Accordingly, both of the left airbag section and the right airbag section are inflated smoothly and evenly from the initial stage of inflation.

In the airbag in which the midsections in the direction of inflation of the left airbag section and the right airbag section are connected to each other, the opposed portions of the left airbag section and the right airbag section may be connected by the joint member extending in the joint direction thereof. In this arrangement, the distance between the inflated left airbag section and the right airbag section can be limited by the length of the joint member.

Referring now to the drawings, embodiments of the present invention will be described.
Fig. 1(a) is a perspective view of an airbag according to an embodiment of the present invention in an inflated state, and Fig. 1(b) is a cross-sectional view taken along the line B-B in Fig. 1(a);
Fig. 2 is a cross-sectional view taken along the line II-II in Fig. 1(b),
Fig. 3 is a cross-sectional view taken along the line III-III in Fig. 1(b);
Fig. 4(a) is an exploded perspective view of the airbag;
and Fig. 4(b) is an enlarged view of a portion B in Fig. 4 (a);
Fig. 5 is a cross-sectional view of an airbag according to another embodiment; and
Fig. 6 is a cross-sectional perspective view of an airbag according to still another embodiment.

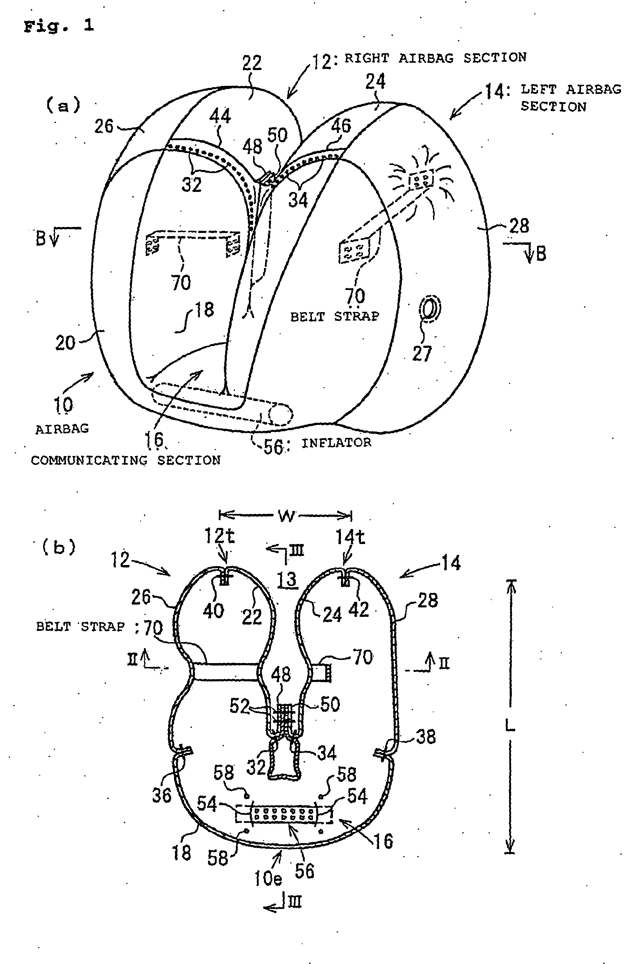

This airbag of Figs. 1 to 4 is an airbag of a passenger airbag apparatus installed in an instrument panel of a vehicle having a passenger's seat on the front left side.
In the following description, a left airbag section and a right airbag section may be referred to simply as a bag.

An airbag 10 includes a right airbag section 12 to be inflated on the right side (on the side of a console in this embodiment) in front of a passenger, a left airbag section 14 to be inflated on the left side (vehicle body side) in front of the passenger, and a communicating section 16 which communicates the right airbag section 12 and the left airbag section 14 with each other at one end sides thereof. The communicating section 16 corresponds to the proximal side of the airbag 10. The respective bags 12, 14 inflate in the direction away from the communicating section 16 respectively.

The respective bags 12, 14 are provided with belt straps 70 as width limiting means for limiting the lateral width of the respective bags upon inflation. The belt straps 70 are joined to front inner panels 22, 24 and front outer panels 26, 28 which constitute left and right side surfaces of the respective bags 12, 14 via seams 72.

The belt straps 70 are located at substantially near the centers of the respective bags 12, 14 in the fore-and-aft direction of the vehicle body. In the right airbag section 12, the belt strap 70 connects the portions near the vertical centers of the respective panels 22, 26. In the left airbag section 14, one end of the belt strap 70 is connected to the portion near the vertical center of the panel 24, and the other end thereof is connected to the upper portion of the vehicle body side panel 28. In the left airbag section 14, the belt strap 70 may be connected to the lower portion of the panel 24.

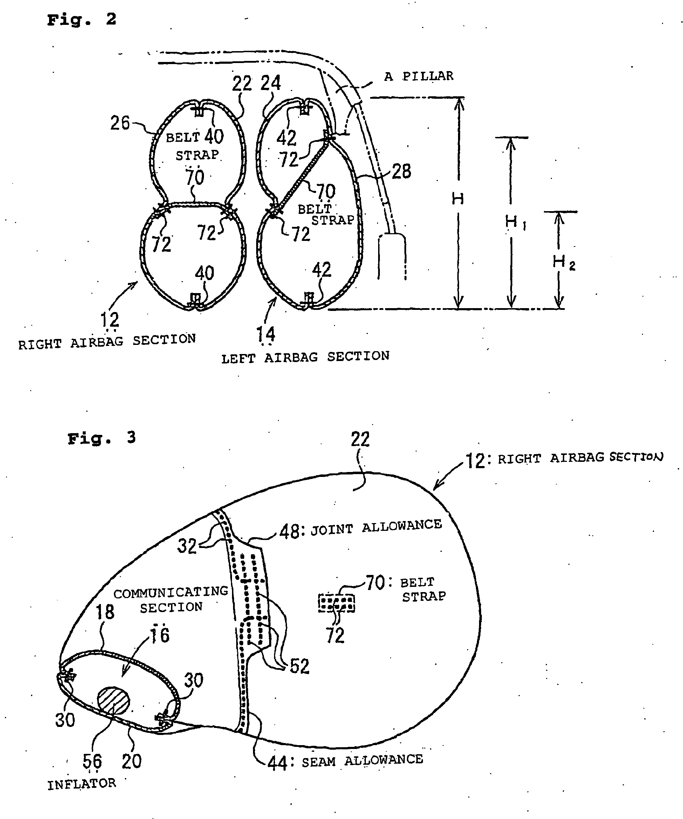

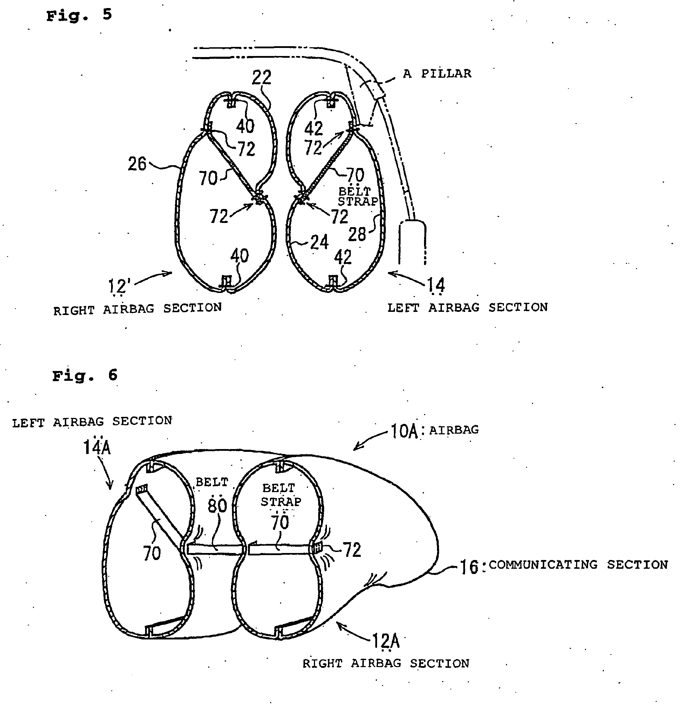

As shown in Fig. 2, assuming that H represents the entire height of the vertical cross section in the direction of the width of the bag passing through the belt strap 70 of the bag 14 when inflation is completed, H₁ represents the height from the lowest level of the bag 14 to a joint portion between the belt strap 70 and the vehicle body side panel 28 in the vertical cross section, and H₂ represents the height from the lowest level of the bag 14 to a joint portion between the belt strap 70 and the opposite side panel 24 in the vertical cross section, H₁ is within the range from 0.4H to 0.8H, and H₂ is within the range from 0.3H to 0.6H, and the relation therebetween is H₁>H₂. The difference between H₁ and H₂ (H₁-H₂) is preferably within the range from 0.1H to 0.5H, in particular, within the range from 0.2H to 0.4H. As shown in Fig. 5 which will be described later, it is the same also in the case in which the belt strap of the right airbag section is extended in the oblique direction.

When the right airbag section 12 and the left airbag section 14 are inflated, the width is limited by the belt strap 70.

In the airbag 10, the midsection in the direction of inflation of the right airbag section 12 and the midsection in the direction of inflation of the left airbag section 14 are connected by a seam 52.

In this embodiment, the outline of the airbag 10 is defined by panels 18, 20, 22, 24, 26, and 28.

The panel 18 (rear inner panel) constitutes opposed surfaces of the respective bags 12, 14 on the proximal side and the passenger side of the communicating section 16. The panel 20 (rear outer panel) constitutes the sides of the respective bags 12, 14 on the opposite sides from the opposing sides, and constitutes the side of the communicating section 16 opposite from the passenger.

The panels 22, 24 (front inner panels) constitute the opposed surfaces of the respective bags 12, 14.

The panels 26, 28 (front outer panels) constitute surfaces opposite from the opposed surfaces of the respective bags 12, 14.

Reference numeral 30 designates a seam (sewing thread) which stitches the rear inner panel 18 and the rear outer panel 20 together, reference numerals 32, 34 designate seams which stitch the rear inner panel 18 and the front inner panels 22, 24 together, and reference numerals 36, 38 designate seams which stitch the rear outer panel 20 and the front outer panels 26, 28 together.

The front outer panels 26, 28 are respectively provided with vent holes 27.

As shown in Fig. 1(a), seam allowances (joint allowances) 44, 46 between the rear inner panel 18 and the front inner panels 22, 24 are disposed so as to be exposed to the outer surfaces of the respective bags 12, 14. As shown in Figs. 1 and 3, tongue-shaped joint allowances 48, 50 are formed so as to project from the seam allowances 44, 46, and the joint allowances 48, 50 are stitched together by the seam 52.

The rear outer panel 20 constituting the outer side surface of the communicating section 16 is provided with a pair of slits 54, 54 for inserting the inflator. A rod-shaped inflator 56 is inserted and disposed in the slits 54, 54.

The airbag 10 is fabricated in the following procedure.

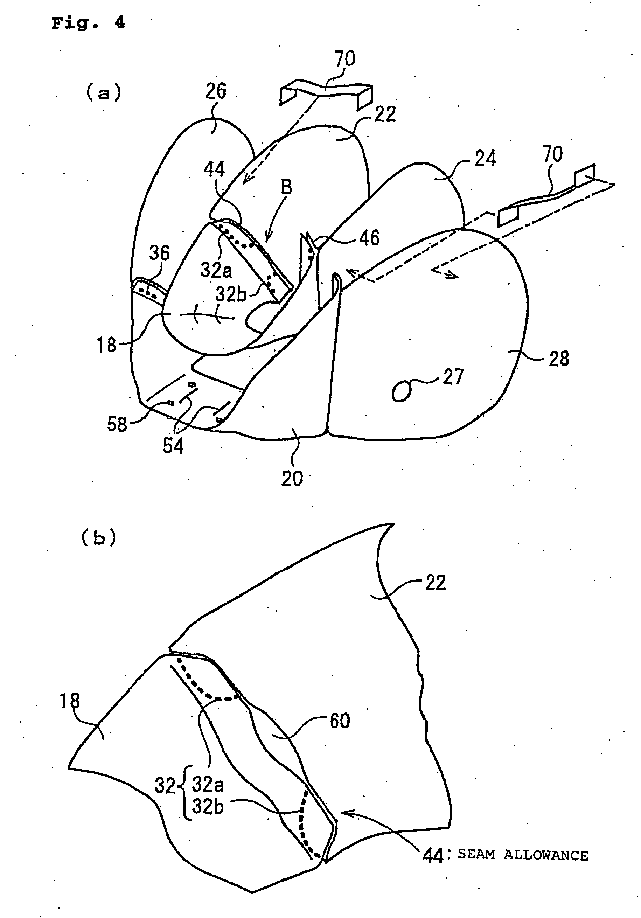

As shown in Fig. 4(a), the rear inner panel 18 and the front inner panels 22, 24 are stitched together by the seams 32, 34, and the rear outer panel 20 and the front outer panels 26, 28 are stitched together by the seams 36, 38. In this case, the seam allowances 44, 46 between the rear inner panel 18 and the front inner panels 22, 24 are disposed on the side exposed to the outside of the airbag in the airbag product.

In this embodiment, at the seam allowance 44 between the rear inner panel 18 and the front inner panel 22, as shown in Fig. 4(b), the rear inner panel 18 and the front inner panel 22 are stitched together at both ends of the seam allowance 44 by the seams 32 (32a, 32b), and an opening 60 for reversing the airbag is formed between the seams 32a, 32b.

Subsequently, a stitched body including the rear inner panel 18 and the front inner panels 22, 24 and the stitched body including the rear outer panel 20 and the front outer panels 26, 28 are stitched together by seams 30, 40, 42. Both ends of the belt strap 70 are sewed to the panels 22, 26 and the panels 24, 28. Accordingly, an intermediate body of the airbag product in the reversed state is fabricated.

Subsequently, the intermediate body of the airbag product is reversed to turn inside out by the opening 60 formed at the seam allowance 44. Then, the joint allowances 48, 50 of the seam allowances 44, 46 are stitched together by the seam 52 whereby the airbag 10 product is completed.

When stitching the joint allowances 48, 50 together, the opening 60 is closed by the seam 52.

The airbag 10 is folded and stored in the case, and connected to the case by a bolt (not shown) passed through a bolt insertion hole 58 (Fig. 1(b)). A lid is mounted to the case so as to cover the folded body of the airbag 10.

The airbag apparatus is installed in the instrument panel in front of the passenger's seat of the vehicle. Upon collision of the vehicle, the inflator 56 is activated and injects gas, and the right airbag section 12 and the left airbag section 14 are inflated on the right side and the left side in front of the passenger, respectively.

In this airbag 10, since the respective lateral widths of the right airbag section 12 and the left airbag section 14 after being inflated are limited by the belt straps 70, the internal capacities of the right airbag section 12 and the left airbag section 14 are relatively small. Therefore, even though the inflator 56 having a small capacity is employed, the right airbag section 12 and the left airbag section 14 are inflated sufficiently quickly.

In this embodiment, since H₁ is within the range from 0.4H to 0.8H, H₂ is within the range from 0.3H to 0.6H, and H₁>H₂ as described above, when the left airbag section 14 is inflated, the upper portion to the intermediate portion on the vehicle body side are pulled inward and downward by the belt straps 70 and, in particular, when (H₁-H₂) is set to within the range from 0.1H to 0.5H, particularly to within the range from 0.2H to 0.4H, the upper portion to the intermediate portion on the vehicle body side is significantly pulled downward. Therefore, as shown in Fig. 2, the upper portion of the left airbag section 14 on the vehicle body side does not interfere with an A-pillar, and a windshield, a side door, and the like in the vicinity thereof.

When the airbag 10 is inflated, even when one of the bags 12 or 14 is inflated earlier, and inflation of the other bags 14 or 12 is delayed, since the midsection of the right airbag section 12 and the left airbag section 14 are connected by the seam 52, one of the bags which started to be inflated earlier starts pulling the other bag which is delayed in inflation in the direction of inflation in the relatively early stage after having started inflation. Accordingly, the respective left and right bags 12, 14 are inflated smoothly and evenly from the early stage of inflation.

In a state in which inflation of the airbag 10 is completed, a void space 13 is formed between the distal end portions of the right airbag section 12 and the left airbag section 14, and the void space 13 is opened toward the passenger. The inflated right airbag section 12 receives the right chest of the passenger, the inflated left half airbag section 14 receives the left chest, and the portion near rib bones opposes the void space 13. Therefore, a reaction force applied to the portion near the rib bones when receiving the airbag is reduced.

In the state in which inflation of the airbag 10 is completed, a distance W between a distal end 12t of the right airbag section 12 and a distal end 14t of the left airbag section 14 is preferably within the range from 150 to 450 mm, more preferably within the range from 170 to 430 mm.

In the above-described embodiment, although one end of the belt strap 70 is connected to the upper portion of the outer panel (panel on the vehicle body side) 28 only in the left airbag section 14, it is also possible to connect the belt strap 70 to the upper portion of the outer panel 26 of the console-side bag as in the case of a right airbag section 12' in Fig. 5. In this arrangement, the airbag apparatus can be mounted commonly on vehicles with a lefthand steering wheel and vehicles with a right-hand steering wheel. It is also possible to equalize the capacity of the left and right bags and equalize the internal pressure when being inflated.

Although the midsections of the right and left bags 12, 14 are connected by stitching the joint allowances 48, 50 provided respectively together in the above-described embodiment, as in the case of the airbag 10A shown in Fig. 6, it is also possible to connect the midsections of a right airbag section 12A and a left airbag section 14A via a belt 80. Other reference numerals in Fig. 6 show the identical portions in Fig. 1 to Fig. 5. A string, net, or panel may be used instead of the belt 80.

Although the side surfaces on the left and right sides of the right airbag section 12 and the left airbag section 14 are connected by the single belt strap 70 respectively in the above-described embodiment, the side surfaces may be connected by two or more belt straps. It is also possible to provide the belt straps for connecting the upper surfaces and the lower surfaces of the right airbag section 12 and the left airbag section 14 to limit the vertical width when the respective airbags 12, 14 are inflated.

The above-described embodiments are presented for demonstrating one example of the present invention, and the present invention is not limited to the mode shown in the drawings. For example, the right airbag section and the left airbag section are connected on the proximal side in the above-described embodiment, the both bags may be separate members. Alternatively, the left airbag section and the right airbag section may be adapted to be inflated by independent inflators.

## Claims

1. An airbag adapted in such a manner that the distal side thereof is inflated in the direction away from the proximal side by gas injected from an inflator disposed on the proximal side comprising:
a left airbag section (14) to be inflated on the left side in front of a passenger; and
a right airbag section (12) to be inflated on the right side in front of the passenger;
wherein at least one of the left airbag section (14) and the right airbag section (12) which is located closer to a side face of a vehicle cabin, that is, the airbag section (14) on the vehicle body side, is provided with a belt strap (70) for connecting the vehicle body side (28) of the airbag section (14) on the vehicle body side and the opposite side (24) of the airbag section (14) on the vehicle body side, so that when assuming that H represents the entire height of the vertical cross section in the direction of the width of the bag passing through the belt strap (70) when inflation of the airbag section (14) on the vehicle body side (28) is completed, H₁, which is the height from the lowest level of the airbag to a joint portion between the belt strap (70) and the bag on the vehicle body side (28) of the airbag section (14) on the vehicle body side in the vertical cross section is within the range from 0.4H to 0.8H, and H₂, which is the height from the lowest level of the airbag to a joint portion between the belt strap (70) and the bag on the opposite side (24) of the airbag section (14) on the vehicle body side in the vertical cross section is within the range from 0.3H to 0.6H, and the relation therebetween is H₁>H₂.

2. The airbag according to Claim 1, wherein (H₁-H₂) is within the range from 0.1H to 0.5H.

3. An airbag that is inflated in the direction in which the distal end moves away from the base end with gas emitted from an inflator disposed on the base end thereof, the airbag comprising:
a left airbag section (14) that is inflated toward the left front of an occupant; and
a right airbag section (12) that is inflated toward the right front of the occupant; the airbag including
width limiting means (70) for limiting the lateral widths of the left airbag section (14) and the right airbag section (12) during inflation, wherein
in at least one of the left airbag section (14) and the right airbag section (12), the width limiting means (70) draws the upper part of the bag adjacent to the car body inward and downward and
wherein the width limiting means (70) is a tether that joins the upper part of the bag adjacent to the car body with the vertical intermediate portion or the lower part of the bag opposite thereto.

4. The airbag according to Claim 1, 2 or 3, wherein
the distal ends of the left airbag section (14) and the right airbag section (12) are not joined with each other; and
a space (13) open to the occupant is formed between the distal ends of the left airbag section (14) and the right airbag section (12) with the airbag in an inflated state

5. The airbag according to one of Claims 1 to 4, wherein the intermediate portions of the left airbag section (14) and the right airbag section (12) in the inflating direction are joined with each other.

6. The airbag according to Claim 5, wherein the opposing portions (22,24,26,28) of the left airbag section (14) and the right airbag section (12) are joined with each other with a connecting member (70) extending in the direction of connection thereof.

7. An airbag system including an airbag and an inflator (56) for inflating the airbag, wherein
the airbag is the airbag according to one of Claims 1 to 6.

## Patentansprüche

1. Airbag, dessen distale Seite von der proximalen Seite weggerichtet durch Gas entfaltbar ist, welches von einer an der proximalen Seite angeordneten Aufblaseinrichtung eingespeist wird, mit:
einem linken Airbagabschnitt (14), der an der linken Seite vor dem Insassen aufgeblasen wird,
einem rechten Airbagabschnitt (12), der an der rechten Seite vor dem Insassen aufgeblasen wird, wobei
mindestens einer, der linke Airbagabschnitt (12) und/oder der rechte Airbagabschnitt (14), der sich näher an einer Seitenfläche der Fahrzeugkabine befindet und den Airbagabschnitt (14) an der Fahrzeugskörperseite bildet, mit einem Gurtband (70) zum Verbinden der Fahrzeugkörperseite (28) des Airbagabschnitts (14) an der Fahrzeugkörperseite und der gegenüberliegenden Seite (24) des Airbagabschnitts (14) an der Fahrzeugkörperseite versehen ist, so dass unter der Annahme, dass
H die Gesamthöhe des Vertikalquerschnitts in Breitenrichtung des Airbags ist, welchen das Gurtband (70) durchläuft, wenn das Aufblasen des Airbagabschnitts (14) an der Fahrzeugkörperseite (28) vervollständigt ist,
H₁ die Höhe von der untersten Horizontalebene des Airbags bis zu einem Verbindungsteil zwischen dem Gurtband (70) und der Fahrzeugkörperseite (28) des Airbagabschnitts (14) an der Fahrzeugkörperseite im Vertikalquerschnitt ist, die im Bereich von 0,4 H bis 0,8 H liegt, und
H₂ die Höhe von der untersten Horizontalebene des Airbags bis zu einem Verbindungsteil zwischen dem Gurtband (70) und der gegenüberliegenden Seite (24) des Airbagabschnitts (14) an der Fahrzeugkörperseite im Vertikalquerschnitt ist, die im Bereich von 0,3 H bis 0,6 H liegt, und das Verhältnis zwischen beiden H₁ > H₂ beträgt.

2. Airbag nach Anspruch 1, wobei (H₁ - H₂) im Bereich von 0,1 H bis 0,5 H liegt.

3. Airbag, der sich in die Richtung entfaltet, in welche sich das distale Ende vom Basisende mittels Gas, welches von einer am Basisende angeordneten Aufblaseinrichtung ausgegeben wird, wegbewegt, mit:
einem linken Airbagabschnitt (14), der sich ausgerichtet zur linken Vorderseite eines Insassen entfaltet, und
einem rechten Airbagabschnitt (12), der sich ausgerichtet zur rechten Vorderseite eines Insassen entfaltet, wobei
der Airbag Weitenbegrenzungsmittel (70) zum Begrenzen der seitlichen Breite des linken Airbagabschnitts (14) und des rechten Airbagabschnitts (12) während des Entfaltens aufweist, wobei
in mindestens einem, dem linken Airbagabschnitt (14) und/oder dem rechten Airbagabschnitt (12), die Weitenbegrenzungsmittel (70) den oberen Abschnitt des Airbags, der sich neben dem Fahrzeugkörper befindet, nach innen und nach unten zieht, und wobei
die Weitenbegrenzungsmittel (70) von einem Haltegurt gebildet werden, der den oberen Teil des Airbags, welcher sich neben dem Fahrzeugkörper befindet, mit dem vertikalen Zwischenabschnitt oder dem diesem gegenüberliegenden unteren Teil des Airbags verbindet.

4. Airbag nach einem der Ansprüche 1, 2 oder 3, wobei
die distalen Enden des linken Airbagabschnitts (14) und des rechten Airbagabschnitts (12) nicht miteinander verbunden sind; und
ein Raum (13), der zum Insassen hin offen ist, zwischen den distalen Enden des linken Airbagabschnitts (14) und des rechten Airbagabschnitts (12) im aufgeblasenen Zustand des Airbags vorgesehen ist.

5. Airbag nach einem der Ansprüche 1 bis 4, wobei die Zwischenabschnitte des linken Airbagabschnitts (14) und des rechten Airbagabschnitts (12) in der Aufblasrichtung miteinander verbunden sind.

6. Airbag nach Anspruch 5, wobei die einander gegenüberliegenden Teile (22, 24, 26, 28) des linken Airbagabschnitts (14) und des rechten Airbagabschnitts (12) mit einem Verbindungselement (70) miteinander verbunden sind, das sich in der Richtung von deren Verbindung erstreckt.

7. Airbagsystem mit einem Airbag und einer Aufblaseinrichtung (56) zum Aufblasen des Airbags, wobei der Airbag ein Airbag nach einem der Ansprüche 1 bis 6 ist.

## Revendications

1. Airbag adapté de telle manière que le côté distal de celui-ci est gonflé dans la direction s'éloignant du côté proximal par du gaz injecté depuis un gonfleur disposé sur le côté proximal comprenant :
une section gauche d'airbag (14) destinée à être gonflée sur le côté gauche devant un passager ; et
une section droite d'airbag (12) destinée à être gonflée sur le côté droit devant le passager ;
dans lequel au moins une section parmi la section gauche d'airbag (14) et la section droite d'airbag (12) qui est située plus près d'un côté latéral d'un habitacle de véhicule, c'est-à-dire la section d'airbag (14) sur le côté de la carrosserie du véhicule, est munie d'une sangle (70) pour relier le côté de la carrosserie du véhicule (28) de la section d'airbag (14) sur le côté de la carrosserie du véhicule et le côté opposé (24) de la section d'airbag (14) sur le côté de la carrosserie du véhicule, de sorte que si l'on suppose que H représente la hauteur totale de la coupe transversale verticale dans la direction de la largeur de l'airbag traversant la sangle (70) lorsque le gonflage de la section d'airbag (14) sur le côté de la carrosserie du véhicule (28) est terminé, H₁, qui est la hauteur depuis le niveau le plus bas de l'airbag vers une partie de raccordement entre la sangle (70) et l'airbag sur le côté de la carrosserie du véhicule (28) de la section d'airbag (14) sur le côté de la carrosserie du véhicule dans la coupe transversale verticale se situe dans la plage allant de 0,4H à 0,8H, et H₂, qui est la hauteur depuis le niveau le plus bas de l'airbag vers une partie de raccordement entre la sangle (70) et l'airbag sur le côté opposé (24) de la section d'airbag (14) sur le côté de la carrosserie du véhicule dans la coupe transversale verticale se situe dans la plage allant de 0,3H à 0,6H, et la relation entre les deux est H₁>H₂.

2. Airbag selon la revendication 1, dans lequel (H₁-H₂) se situe dans la plage allant de 0,1H à 0,5H.

3. Airbag gonflé dans la direction dans laquelle l'extrémité distale s'éloigne de l'extrémité de base avec le gaz émis depuis un gonfleur disposé sur l'extrémité de base de celui-ci, l'airbag comprenant :
une section gauche d'airbag (14) gonflée en direction de l'avant gauche d'un occupant ; et
une section droite d'airbag (12) gonflée en direction de l'avant droit de l'occupant ; l'airbag comprenant
des moyens de limitation de largeur (70) pour limiter les largeurs latérales de la section gauche d'airbag (14) et de la section droite d'airbag (12) pendant le gonflage, dans lequel
dans au moins une section parmi la section gauche d'airbag (14) et la section droite d'airbag (12), les moyens de limitation de largeur (70) définissent la partie supérieure de l'airbag adjacente à la carrosserie de véhicule vers l'intérieur et vers le bas, et dans lequel les moyens de limitation de largeur (70) sont un câble d'attache qui relie la partie supérieure de l'airbag adjacente à la carrosserie de véhicule à la partie intermédiaire verticale ou la partie inférieure de l'airbag en face de celle-ci.

4. Airbag selon la revendication 1, 2 ou 3, dans lequel les extrémités distales de la section gauche d'airbag (14) et de la section droite d'airbag (12) ne sont pas reliées les unes aux autres ; et un espace (13) ouvert sur l'occupant est formé entre les extrémités distales de la section gauche d'airbag (14) et de la section droite d'airbag (12) avec l'airbag dans un état gonflé.

5. Airbag selon l'une des revendications 1 à 4, dans lequel les parties intermédiaires de la section gauche d'airbag (14) et de la section droite d'airbag (12) dans la direction de gonflage sont reliées les unes aux autres.

6. Airbag selon la revendication 5, dans lequel les parties opposées (22, 24, 26, 28) de la section gauche d'airbag (14) et de la section droite d'airbag (12) sont reliées les unes aux autres avec un élément de liaison (70) s'étendant dans la direction de liaison de celles-ci.

7. Système d'airbag comprenant un airbag et un gonfleur (56) pour gonfler l'airbag, dans lequel l'airbag est l'airbag selon l'une des revendications 1 à 6.
